(19) Europäisches Patentamt European Patent Office Office européen des brevets

(11) **EP 4 657 557 A1**

(12) **EUROPEAN PATENT APPLICATION**
published in accordance with Art. 153(4) EPC

(43) Date of publication:
03.12.2025 Bulletin 2025/49

(21) Application number: 23923678.9

(22) Date of filing: 19.09.2023

(51) International Patent Classification (IPC):
$H01M\ 4/36^{(2006.01)}$     $H01M\ 10/052^{(2010.01)}$

(52) Cooperative Patent Classification (CPC):
H01M 4/131; H01M 4/136; H01M 4/36;
H01M 4/485; H01M 4/505; H01M 4/525;
H01M 4/58; H01M 10/052; H01M 10/0525;
Y02E 60/10

(86) International application number:
PCT/CN2023/119691

(87) International publication number:
WO 2024/174513 (29.08.2024 Gazette 2024/35)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.02.2023 CN 202310188335

(71) Applicant: BYD Company Limited
Shenzhen, Guangdong 518118 (CN)

(72) Inventors:
• CHENG, Bin
 Shenzhen, Guangdong 518118 (CN)
• ZHUANG, Minghao
 Shenzhen, Guangdong 518118 (CN)
• DENG, Ruoyi
 Shenzhen, Guangdong 518118 (CN)

(74) Representative: Taor, Simon Edward William
Venner Shipley LLP
200 Aldersgate
London EC1A 4HD (GB)

(54) **POSITIVE ELECTRODE COMPOSITE MATERIAL, POSITIVE ELECTRODE SHEET, SECONDARY BATTERY AND ELECTRICAL DEVICE**

(57) Provided is an electrical device, comprising a secondary battery. The secondary battery comprises a positive electrode sheet, the positive electrode sheet comprising a positive electrode composite material. The positive electrode composite material comprises a first active material and a second active material. The first active material and the second active material satisfy [Equation 1], wherein $r_1$ is the primary-particle average particle size of the first active material, $r_2$ is the primary-particle average particle size of the second active material, $r_1$ and $r_2$ being calculated in a same unit, $D_1$ is the active-ion diffusion coefficient of the first active material, $D_2$ is the active-ion diffusion coefficient of the second active material, $D_1$ and $D_2$ being calculated in a same unit, r1 and r2 are unequal, and/or $D_1$ and $D_2$ are unequal.

FIG. 1

EP 4 657 557 A1

**Description**

This application claims priority to Chinese Patent Application No. 202310188335.X, filed with the China National Intellectual Property Administration on February 22, 2023 and entitled "POSITIVE ELECTRODE COMPOSITE MATERIAL, POSITIVE ELECTRODE PLATE, SECONDARY BATTERY, AND ELECTRICAL DEVICE", which is incorporated herein by reference in its entirety.

**TECHNICAL FIELD**

This application relates to the field of battery technologies, and in particular, to a positive electrode composite material, a positive electrode plate, a secondary battery, and an electrical device.

**BACKGROUND**

With the rapid development of battery technologies, the market has an increasingly high requirement on a volumetric energy density of a battery. In the industry, the volumetric energy density of the battery is generally improved by increasing a compaction density of an electrode plate or by enhancing properties such as a working voltage of an electrode active material. However, the foregoing two factors always affect each other. For example, a working voltage of a material is generally increased by performing doping modification on the material. This reduces a diffusion coefficient of active ions of the material, and affects battery performance. To alleviate the foregoing problems, a particle size of the material needs to be reduced, which in turn reduces the compaction density of the electrode plate.

Currently, in the industry, the foregoing problems are generally alleviated by mixing active material particles with different particle sizes or mixing different materials. This clearly leads to a large difference between ionic conducting performance of different materials in the composite material. Consequently, an improvement to an energy density of a final battery is limited, and the energy density and power performance of the battery still cannot be balanced.

**SUMMARY**

In view of this, this application provides a positive electrode composite material, where the positive electrode composite material includes at least two different positive electrode active materials, and particle sizes and diffusion coefficients of active ions of different active materials meet a mathematical relationship. Therefore, the positive electrode composite material can have both a high energy density and good power performance.

A first aspect of this application provides a positive electrode composite material, including:

a first active material; and
a second active material, where
the first active material and the second active material meet the following relationship:

$$0.5 \leq \left( \frac{r_1^2}{D_1} \right) \Big/ \left( \frac{r_2^2}{D_2} \right) \leq 2$$

where $r_1$ is an average particle size of primary particles of the first active material, $r_2$ is an average particle size of primary particles of the second active material, and $r_1$ and $r_2$ are in a same unit; $D_1$ is a diffusion coefficient of active ions of the first active material, $D_2$ is a diffusion coefficient of active ions of the second active material, and $D_1$ and $D_2$ are in a same unit; and $r_1$ is not equal to $r_2$, and/or $D_1$ is not equal to $D_2$.

In the positive electrode composite material, a diffusion time of the active ions inside the first active material is (0.5-2) times of a diffusion time of the active ions inside the second active material, and a diffusion time of active ions inside particles of the entire positive electrode composite material is limited within a controllable time range, Therefore, it is convenient to adjust an overall ionic conductivity of the positive electrode composite material to be high, and charge/-discharge performance across regions of a final positive electrode plate can be consistent. This also facilitates normal utilization of a material capacity, allowing each active material to exhibit inherent energy density properties of the material. Therefore, the positive electrode composite material can have both a high energy density and good power performance.

In some implementations, $r_1$ is not equal to $r_2$.

In some implementations, $r_1 > r_2$ and $D_1 < D_2$, or $r_2 > r_1$ and $D_2 < D_1$.

In some implementations, the active ions may be at least one of lithium ions, sodium ions, potassium ions, magnesium ions, aluminum ions, and the like.

In some implementations, the first active material and the second active material independently include at least one of a phosphate-based positive electrode material and an oxide-based positive electrode material; the phosphate-based positive electrode material includes $Li_{1-a}A_aMn_xM_yFe_{1-x-y}(P_{1-b}E_b)O_4$, where $0 \leq a < 1$, $0 \leq x+y < 1$, $0 \leq b < 1$, A includes $K^+$, $Ca^+$, $Na^+$, and $NH4^+$, M includes one or more of Ti, V, Co, Ni, Cu, Zn, Mg, Ca, Al, Nb, and Mo, and E includes one or more of N, Si and B; and the oxide-based positive electrode material includes one or more of a lithium nickel cobalt manganese oxide, a lithium nickel cobalt aluminum oxide, a lithium-rich manganese-based material, a lithium cobalt oxide, and a lithium manganese oxide.

In some implementations, the first active material is $Li_{1-a1}A_{a1}Mn_{x1}M_{y1}Fe_{1-x1-y1}(P_{1-b1}E_{b1})O_4$, where $0 \leq a_1 < 1$, $0 \leq x_1+y_1 < 1$, and $0 \leq b_1 < 1$; the second active material is $Li_{1-a2}A_{a2}Mn_{x2}M_{y2}Fe_{1-x2-y2}(P_{1-b2}E_{b2})O_4$, where $0 \leq a_2 < 1$, $0 \leq x_2+y_2 < 1$, and $0 \leq b_2 < 1$; and $x_1 > x_2$ and $r_1 < r_2$, or $x_1 < x_2$ and $r_1 > r_2$.

In some implementations, the first active material is $Li_{1-a1}A_{a1}Mn_{x1}M_{y1}Fe_{1-x1-y1}(P_{1-b1}E_{b1})O_4$, where $0 \leq a_1 < 1$, $0 \leq x_1+y_1 < 1$, and $0 \leq b_1 < 1$; the second active material is $Li_{1-a2}A_{a2}Mn_{x2}M_{y2}Fe_{1-x2-y2}(P_{1-b2}E_{b2})O_4$, where $0 \leq a_2 < 1$, $0 \leq x_2+y_2 < 1$, and $0 \leq b_2 < 1$; and $x_1 = x_2$.

In some implementations, $r_1$ and $r_2$ are in a range of 20 nm to 5 $\mu$m, respectively.

In some implementations, $0.8 \leq \left(\dfrac{r_1^2}{D_1}\right) \Big/ \left(\dfrac{r_2^2}{D_2}\right) \leq 1.25$ .

In some implementations, $\dfrac{r_1^2}{D_1} = \dfrac{r_2^2}{D_2}$ .

In some implementations, the second active material includes at least one active material.

In some implementations, the second active material includes a second active material A and a second active material B; and

the first active material and the second active material meet the following relationship:

$$\frac{r_1^2}{D_1} = \lambda_1 \frac{r_{2-1}^2}{D_{2-1}} = \lambda_2 \frac{r_{2-2}^2}{D_{2-2}}, \ 0.5 \leq \lambda_1 \leq 2, \ 0.5 \leq \lambda_2 \leq 2$$

where r1 is the average particle size of primary particles of the first active material, r2-1 is an average particle size of primary particles of the second active material A, r2-2 is an average particle size of primary particles of the second active material B, and r1, r2-1, and r2-2 are in a same unit; D1 is the diffusion coefficient of the active ions of the first active material, D2-1 is a diffusion coefficient of active ions of the second active material A, D2-2 is a diffusion coefficient of active ions of the second active material B, and D1, D2-1, and D2-2 are in a same unit; and r1, r2-1, and r2-2 are all not equal, and/or D1, D2-1, and D2-2 are all not equal.

In some implementations, $0.8 \leq \lambda_1 \leq 1.25$, and $0.8 \leq \lambda_2 \leq 1.25$.

In some implementations, $\lambda_1 = \lambda_2 = 1$.

A second aspect of this application provides a positive electrode plate, including the positive electrode composite material provided in the first aspect of this application. Because the positive electrode composite material is used, diffusion times of active ions across regions inside an active material layer of the positive electrode plate is highly uniform, so that charge/discharge capabilities across the regions of the positive electrode plate are highly consistent. In addition, the positive electrode plate may be used to provide a battery having both a high energy density and a high power.

A third aspect of this application provides a secondary battery, including the positive electrode plate provided in the second aspect of this application. Because the positive electrode plate is used, the secondary battery can have both a high energy density and high power performance.

A fourth aspect of this application provides an electrical device, including the secondary battery provided in the third aspect of this application. Because the secondary battery is used, the electrical device has a long range endurance.

## BRIEF DESCRIPTION OF THE DRAWINGS

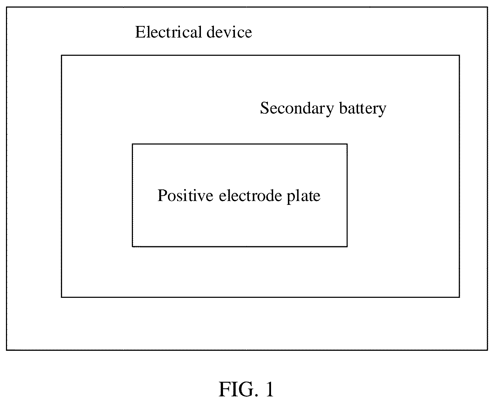

FIG. 1 is a schematic diagram of a structure of an electrical device according to an embodiment.

## DESCRIPTION OF EMBODIMENTS

Embodiments of this application provide a positive electrode composite material, including at least two different positive electrode active materials, where particle sizes and/or diffusion coefficients of ions of a plurality of active materials are different, and particle sizes and diffusion coefficients of active ions of different active materials meet a mathematical relationship. Therefore, the positive electrode composite material can have both a high energy density and a high power.

A first aspect of this application provides a positive electrode composite material, including a first active material and a second active material, where the first active material and the second active material meet the following relationship:

$$0.5 \le \left(\frac{r_1^2}{D_1}\right)\Big/\left(\frac{r_2^2}{D_2}\right) \le 2$$

where $r_1$ is an average particle size of primary particles of the first active material, $r_2$ is an average particle size of primary particles of the second active material, and $r_1$ and $r_2$ are in a same unit; $D_1$ is a diffusion coefficient of active ions of the first active material, $D_2$ is a diffusion coefficient of active ions of the second active material, and $D_1$ and $D_2$ are in a same unit; and $r_1$ is not equal to $r_2$, and/or $D_1$ is not equal to $D_2$.

In the foregoing mathematical relationship, $r_1$ and $r_2$ represent the particle size of the primary particles of the active material and are length values, and $D_1$ and $D_2$ represent the diffusion coefficients of the active ions (for example, lithium ions) of the active material, and may have a unit of $cm^2/s$. In this case, $r_{12}/D_1$ and $r_{22}/D_2$ have a unit of time, and can be used to measure a diffusion time of active ions inside the active material particle. It may be understood that, in the foregoing positive electrode composite material, $r_{12}/D_1$ of the first positive electrode active material and $r_{22}/D_2$ of the second positive electrode active material meet the foregoing numerical relationship. That is, the diffusion time of the active ions inside the first active material is (0.5-2) times of the diffusion time of the active ions inside the second active material, and a diffusion time of active ions inside particles of the entire positive electrode composite material is limited within a controllable time range, Therefore, it is convenient to adjust an overall ionic conductivity of the positive electrode composite material to be high, and charge/discharge performance across regions of a final positive electrode plate can be consistent. This also facilitates normal utilization of a material capacity, allowing, on this basis, each active material to exhibit inherent energy density properties of the material. Therefore, the positive electrode composite material can have both a high energy density and good power performance.

For example, a value of the foregoing $\left(\frac{r_1^2}{D_1}\right)\Big/\left(\frac{r_2^2}{D_2}\right)$ may be 0.5, 0.6, 0.7, 0.8, 0.9, 1.0, 1.1, 1.2, 1.3, 1.4, 1.5, 1.6, 1.7, 1.8, 1.9, 1.95, 1.98, or the like. If the value of $\left(\frac{r_1^2}{D_1}\right)\Big/\left(\frac{r_2^2}{D_2}\right)$ is excessively large or excessively small, a difference between diffusion times of active ions inside active particles in the positive electrode composite material is excessively large. Consequently, diffusion times of active ions in the entire positive electrode composite material is different, and precise control cannot be implemented. As a result, a battery having both a high energy density and high power performance cannot be obtained.

It may be understood that when at least one group of parameters of the average particle size of the primary particles and the diffusion coefficient of the active ions of the first positive electrode active material and the second positive electrode active material are different, the first positive electrode active material and the second positive electrode active material are considered as two different active materials.

In this application, average particle sizes of primary particles of active materials are distinguished. Certainly, in actual application, a phenomenon that primary particles of a plurality of active materials agglomerate into secondary particles may exist, and a particle size of the secondary particle of each active material is not limited in this application, provided that the particle size of the primary particle meets the technical solution of this application.

In this application, the average particle size of the primary particles of each active material is determined by using a scanning electron microscope (scanning electron microscope, SEM ) test. Specifically, an SEM photo of the active material may be taken, and an average particle size of primary particles of a sample may be determined in combination with software such as image analysis software Image J or particle size analysis software. Specifically, particle size distribution of the active material particles is observed under SEM (a quantity of active material particles in a sampled object is generally 500 or more, preferably 1000 or more). When a cumulative quantity percentage of the active material particles reaches 50%, a corresponding particle size is determined to be the foregoing average particle size of the primary particles.

In this application, the diffusion coefficient of the active ions of each active material can be determined by using electrochemical impedance spectroscopy (EIS for short). For example, a lithium-ion battery is used as an example. Testing the diffusion coefficient of the active ions by using EIS may include the following steps:

To-be-tested different active materials were separately used as positive electrode materials and were disposed on two side surfaces of a current collector suitable for a positive electrode to obtain active material electrode plates.

The active material electrode plates were assembled with a negative electrode plate (for example, lithium foil) and a separator to obtain a button cell, a charge/discharge cycling test was carried out at 25°C at a current rate of 0.1C, and a state of charge of the cell was adjusted after three cycles. An EIS test was carried out to obtain a Warburg impedance factor $\sigma$, and the diffusion coefficient of the active ions of each active material was calculated based on the following formula:

$$D = \frac{R^2 T^2}{2A^2 n^4 F^4 C^2 \sigma^2}$$

where D represents the diffusion coefficient of the active ions of the active material; R is the gas constant, R=8.314J/(mol·K); T is the absolute temperature, where specifically, when the EIS test is carried out on the button cell at 25°C, T=298.15K; n is a quantity of electrons per mole participating in the electrochemical reaction (for $Li^+$, the value is 1); A is an active area of the electrode plate; F is the Faraday constant, and is specifically 96485C/mol; and C is a concentration of active ions $Li^+$ in the positive electrode material. Corresponding to the positive electrode composite material in this application, the diffusion coefficient of the active ions of the first active material is denoted as $D_1$, and the diffusion coefficient of the active ions of the second active material is denoted as $D_2$. With another type of ion battery, a material of the negative electrode plate needs to be changed for adaptation.

In this application, the second active material may include only one active material, or the second active material may include two or more active materials. For example, the positive electrode composite material may include the first active material, a second active material A, and a second active material B, where $r_1$ is the average particle size of the primary particles of the first active material, $r_{2-1}$ is an average particle size of primary particles of the second active material A, $r_{2-2}$ is an average particle size of primary particles of the second active material B, and $r_1$, $r_{2-1}$, and $r_{2-2}$ are in a same unit; $D_1$ is the diffusion coefficient of the active ions of the first active material, $D_{2-1}$ is a diffusion coefficient of active ions of the second active material A, $D_{2-2}$ is a diffusion coefficient of active ions of the second active material B, and $D_1$, $D_{2-1}$ and $D_{2-2}$ are in a same unit; and $r_1$, $r_{2-1}$, and $r_{2-2}$ are all not equal, and/or $D_1$, $D_{2-1}$, and $D_{2-2}$ are all not equal. In this case, for ease of description, the mathematical relationship between the first active material and the two second active materials may be analyzed into the following form:

$$\frac{r_1^2}{D_1} = \lambda_1 \frac{r_{2-1}^2}{D_{2-1}} = \lambda_2 \frac{r_{2-2}^2}{D_{2-2}}, \ 0.5 \leq \lambda_1 \leq 2, \ 0.5 \leq \lambda_2 \leq 2$$

In this case, $\lambda_1$ and $\lambda_2$ may be the same or different.

The foregoing case is merely further analysis and description of the foregoing technical solution, and basic principles and technical effects thereof are the same. Details are not described herein again. A person skilled in the art may determine a quantity of types of second active materials based on an actual requirement, and analyze, adapt, and expand the numerical relationship between the average particle sizes of the primary particles and the diffusion coefficients of the active ions of the first active material and the plurality of second active materials based on the foregoing principles. In other words, when the second active material includes two or more active materials, the explanations and descriptions of the second active material are also applicable to any active material included in the second active material. For example, when the second active material includes the second active material A and the second active material B, in this embodiment of this application, the average particle size $r_2$ of the primary particles of the second active material may be replaced with either $r_{2-1}$ or $r_{2-2}$, and the diffusion coefficient $D_2$ of the active ions of the second active material may be replaced with either $D_{2-1}$ and $D_{2-2}$.

In some implementations of this application, $0.8 \leq \left(\frac{r_1^2}{D_1}\right) \Big/ \left(\frac{r_2^2}{D_2}\right) \leq 1.25$. If a value of $0.8 \leq \left(\frac{r_1^2}{D_1}\right) \Big/ \left(\frac{r_2^2}{D_2}\right) \leq 1.25$ is controlled to be within the foregoing range, uniformity of diffusion times of ions inside the active material particles in the positive electrode composite material can be further improved, thereby helping adjust ionic conducting performance of the positive electrode composite material to be better, and further helping obtain a battery having better power performance and a better energy density.

In some specific embodiments, $\frac{r_1^2}{D_1} = \frac{r_2^2}{D_2}$. In this case, the positive electrode composite material has better ion conducting uniformity, so that it is easier to obtain a battery having both a high power and a high energy density. It may be understood that when the positive electrode composite material includes a plurality of second active materials, the foregoing formula may be analyzed. For example, if the positive electrode composite material includes the second active material A and the second active material B, after analysis, both the foregoing $\lambda_1$ and $\lambda_2$ fall within a range of 0.8 to 1.25. In

some specific embodiments, $\lambda_1 = \lambda_2 = 1$, that is, $\dfrac{r_1^2}{D_1} = \dfrac{r_{2-1}^2}{D_{2-1}} = \dfrac{r_{2-2}^2}{D_{2-2}}$ .

In this application, the active ions may be at least one of lithium ions, sodium ions, potassium ions, magnesium ions, aluminum ions, and the like.

In some implementations of this application, $r_1$ is not equal to $r_2$. That is, the average particle size of the primary particles of the first active material is not equal to the average particle size of the primary particles of the second active material. In some specific embodiments, when the positive electrode composite material includes two or more second active materials, average particle sizes of primary particles of the active material particles are all not equal. In this case, the diffusion coefficients $D_1$ and $D_2$ of the active ions of the active material particles may be equal or may not be equal. In some specific embodiments, when a plurality of second active materials are included, average particle sizes of primary particles of different second active materials are all not equal, and the average particle sizes of the primary particles of the second active materials are all not equal to the average particle size of the primary particles of the first active material, for example, $r_1 \neq r_{2-1} \neq r_{2-2}$. In this case, $D_1$, $D_{2-1}$, and $D_{2-2}$ may not be equal, or may be equal, or values of any two of $D_1$, $D_{2-1}$, and $D_{2-2}$ are equal. Under the condition, the diffusion times of the active ions inside the active material particles in various parts of the positive electrode composite material system are basically the same. However, when materials with different particle sizes are combined, the positive electrode composite material can achieve a higher compaction density, so that an energy density of a final battery can be further improved.

In some specific implementations, when $r_1$ is not equal to $r_2$, $D_1$ is also different from $D_2$. Further, in some specific embodiments, $r_1 > r_2$ and $D_1 < D_2$, or $r_2 > r_1$ and $D_2 < D_1$ are met. In this case, it better helps adjust a ratio of $\dfrac{r_1^2}{D_1}$ and $\dfrac{r_2^2}{D_2}$ to be close to 1, so that the diffusion times of the active ions inside the active material particles in the positive electrode composite material are closer. Therefore, it better helps obtain a battery having both a high energy density and high power performance. It may be understood that when the positive electrode composite material includes a plurality of second active materials, the foregoing implementation is also applicable. A person skilled in the art may perform adaptation based on an actual situation and the numerical relationship between the average particle sizes of the primary particles and the diffusion coefficients of the active ions of the active materials provided in this application. Details are not described herein again.

In some implementations of this application, when the active ions are lithium ions, the first active material and the second active material independently include at least one of a phosphate-based positive electrode material and an oxide-based positive electrode material; the phosphate-based positive electrode material includes $Li_{1-a}A_aMn_xM_yFe_{1-x-y}(P_{1-b}E_b)O_4$, where $0 \leq a < 1$, $0 \leq x+y < 1$, $0 \leq b < 1$, A includes $K^+$, $Ca^+$, $Na^+$, and $NH4^+$, M includes one or more of Ti, V, Co, Ni, Cu, Zn, Mg, Ca, Al, Nb, and Mo, and E includes one or more of N, Si and B; and the oxide-based positive electrode material includes one or more of a lithium nickel cobalt manganese oxide, a lithium nickel cobalt aluminum oxide, a lithium-rich manganese-based material, a lithium cobalt oxide, and a lithium manganese oxide. The lithium manganese oxide may be a spinel lithium manganese oxide $LiMn_2O_4$ or a layered lithium manganese oxide $LiMnO_2$. It may be understood that element doping on a lithium iron phosphate material helps improve comprehensive electrochemical performance of the material. Particularly, an average working voltage of a lithium manganese iron phosphate material obtained by doping the manganese element into lithium iron phosphate is high. This helps improve an energy density of the positive electrode composite material. When further substitution is performed at lithium sites, iron sites, and/or phosphorus sites based on the lithium manganese iron phosphate, performance such as an ionic conductivity, an electronic conductivity, structural stability, and a working voltage of the material can be further improved. It may be understood that when the positive electrode composite material includes a plurality of second active materials, the foregoing implementation is also applicable. A person skilled in the art may perform adaptation based on an actual situation. Details are not described herein again.

In some specific embodiments, the first active material and the second active material are independently selected from phosphate-based positive electrode materials; or the first active material and the second active material are independently selected from oxide-based positive electrode materials. That is, the positive electrode composite material may be a mixed system of different phosphate-based positive electrode materials, or may be a mixed system of different oxide-based positive electrode materials. In this case, it is easier to obtain a positive electrode composite material with uniform ionic conducting performance, and when the positive electrode composite material is a phosphate-based positive electrode material, higher safety performance of the final battery can be ensured. It may be understood that when the positive electrode composite material includes a plurality of second active materials, the foregoing implementation is also applicable. A person skilled in the art may perform adaptation based on an actual situation. Details are not described herein again.

In some implementations of this application, the first active material is $Li_{1-a1}A_{a1}Mn_{x1}M_{y1}Fe_{1-x1-y1}(P_{1-b1}E_{b1})O_4$, where $0 \leq a_1 < 1$, $0 \leq x_1+y_1 < 1$, and $0 \leq b_1 < 1$; the second active material is $Li_{1-a2}A_{a2}Mn_{x2}M_{y2}Fe_{1-x2-y2}(P_{1-b2}E_{b2})O_4$, where

$0 \leq a_2 < 1$, $0 \leq x_2 + y_2 < 1$, and $0 \leq b_2 < 1$; and $x_1 > x_2$ and $r_1 < r_2$, or $x_1 < x_2$ and $r_1 > r_2$. A higher content of the Mn element in the active material indicates a higher average working voltage of the material. This helps improve the energy density of the material. However, as the content of the Mn element increases, the ionic conductivity of the material decreases accordingly, so that ionic conducting performance of the battery can be high by controlling the average particle size of the primary particles of the active material with a high manganese content to be small. Therefore, a battery having both a high energy density and high power performance can be obtained more easily. It may be understood that when the positive electrode composite material includes a plurality of second active materials, the foregoing implementation is also applicable. A person skilled in the art may perform adaptation based on an actual situation. Details are not described herein again.

In some implementations of this application, the first active material is $Li_{1-a1}A_{a1}Mn_{x1}M_{y1}Fe_{1-x1-y1}(P_{1-b1}E_{b1})O_4$, where $0 \leq a_1 < 1$, $0 \leq x_1 + y_1 < 1$, and $0 \leq b_1 < 1$; the second active material is $Li_{1-a2}A_{a2}Mn_{x2}M_{y2}Fe_{1-x2-y2}(P_{1-b2}E_{b2})O_4$, where $0 \leq a_2 < 1$, $0 \leq x_2 + y_2 < 1$, and $0 \leq b_2 < 1$; and $x_1 = x_2$, and $D_1 \neq D_2$ and/or $r_1 \neq r_2$. When the foregoing condition is met, two different phosphate-based positive electrode active materials with a high average working voltage can be obtained. It may be understood that when the positive electrode composite material includes a plurality of second active materials, the foregoing implementation is also applicable. A person skilled in the art may perform adaptation based on an actual situation. Details are not described herein again.

In some implementations of this application, $r_1$ and $r_2$ are in a range of 20 nm to 5 $\mu$m, respectively. That is, the average particle sizes of the primary particles of the first active material and the second active material separately are in the range of 20 nm to 5 $\mu$m. For example, the average particle sizes of the primary particles of the first active material and the second active material may be 20 nm, 30 nm, 50 nm, 60 nm, 80 nm, 100 nm, 200 nm, 500 nm, 800 nm, 1 $\mu$m, 2 $\mu$m, 3 $\mu$m, 4 $\mu$m, 5 $\mu$m, or the like. In some specific embodiments, r1 and r2 separately fall within a range of 50 nm to 1 $\mu$m. In this case, it better helps control a diffusion path of active ions inside the active material particles to be short, so that the positive electrode composite material has good ionic conducting performance and can achieve a high compaction density. It may be understood that when the positive electrode composite material includes a plurality of second active materials, the foregoing implementation is also applicable. A person skilled in the art may perform adaptation based on an actual situation. Details are not described herein again.

In some implementations of this application, the first active material and the second active material may be directly mixed. Specifically, the mixing method includes but is not limited to a method such as ball milling, powder mixing, and liquid-phase mixing.

Correspondingly, an embodiment of this application provides a positive electrode plate, including the positive electrode composite material provided in this embodiment of this application. Because the positive electrode composite material is used, diffusion times of active ions across regions inside an active material layer of the positive electrode plate is highly uniform, so that charge/discharge capabilities across the regions of the positive electrode plate are highly consistent. In addition, the positive electrode plate may be used to provide a battery having both a high energy density and high power performance.

In some implementations of this application, the positive electrode plate includes a positive electrode current collector and an active material layer disposed on at least one side surface of the positive electrode current collector, and the active material layer includes a positive electrode composite material and a binder, and an optional conductive agent and an optional dispersant. The binder, the conductive agent, and the dispersant may be conventional choices in the battery field. The positive electrode current collector may be various materials suitable to be used as a current collector of the positive electrode plate, including but not limited to pure metal foil, alloy foil, a metal-coated polymer film, or the foregoing material coated with carbon on a surface.

In some implementations of this application, the positive electrode composite material, the binder, the conductive agent, and the optional dispersant are added to a solvent (which may be N-methylpyrrolidone), and are evenly mixed to obtain a positive electrode slurry. Then, the positive electrode slurry is coated on a surface of the positive electrode current collector, followed by processes such as drying, rolling, and slitting, to obtain the foregoing positive electrode plate.

It may be understood that, in some other implementations, the first active material, the second active material, the binder, the conductive agent, and the optional binder may be directly added to a solvent, and are evenly mixed to obtain a positive electrode slurry. Then, the positive electrode slurry is coated on a surface of the positive electrode current collector, followed by processes such as drying, rolling, and slitting, to obtain the foregoing positive electrode plate.

An embodiment of this application further provides a secondary battery, including the positive electrode plate provided in this embodiment of this application. Because the positive electrode plate is used, the secondary battery can have both a high energy density and high power performance. The secondary battery may be a battery using a liquid electrolyte, or a semi-solid or solid-state battery using a semi-solid state electrolyte or a solid-state electrolyte. In some implementations, the secondary battery may include the foregoing positive electrode plate, a negative electrode plate, and a separator and an electrolyte that are disposed between the positive electrode plate and the negative electrode plate. In some other implementations, the secondary battery may include a positive electrode plate, a negative electrode plate, and a semi-solid state electrolyte or a solid-state electrolyte disposed between the positive electrode plate and the negative electrode plate. In addition, when a semi-solid state electrolyte or a solid-state electrolyte is used, the positive electrode plate and the negative electrode plate may further contain a semi-solid state electrolyte material or a solid-state electrolyte material.

In some implementations of this application, the secondary battery may be a lithium-ion battery, a sodium-ion battery, a potassium-ion battery, a dual-ion battery, or the like.

As shown in FIG. 1, an embodiment of this application further provides an electrical device, including the secondary battery provided in this embodiment of this application. Because the secondary battery is used, the electrical device has a long range endurance.

In some implementations of this application, the electrical device includes but is not limited to a 3C electronic product (for example, a mobile phone, a tablet computer, or a wearable electronic device), and a vehicle (for example, a new energy vehicle or a boat).

The following describes in detail the technical solution of this application by using a plurality of Examples.

Example 1

A positive electrode composite material includes a first active material $LiMn_{0.6}Fe_{0.4}PO_4$ and a second active material $LiMn_{0.8}Fe_{0.2}PO_4$ in a mass ratio of 1:1. An average particle size $r_1$ of primary particles of the first active material is 200 nm, and a diffusion coefficient $D_1$ of active ions (specifically, lithium ions) thereof is $8 \times 10^{-14}$ cm$^2$/s. An average particle size $r_2$ of primary particles of the second active material is 100 nm, and a diffusion coefficient $D_2$ of active ions (specifically, lithium ions) thereof is $2 \times 10^{-14}$ cm$^2$/s. $\left(\dfrac{r_1^2}{D_1}\right)\bigg/\left(\dfrac{r_2^2}{D_2}\right)=1$ .

Example 2

A difference from Example 1 is only that the average particle size $r_2$ of the primary particles of the second active material is 141 nm. $\left(\dfrac{r_1^2}{D_1}\right)\bigg/\left(\dfrac{r_2^2}{D_2}\right)=0.5$ .

Example 3

A difference from Example 1 is only that the average particle size $r_2$ of the primary particles of the second active material is 70.7 nm. $\left(\dfrac{r_1^2}{D_1}\right)\bigg/\left(\dfrac{r_2^2}{D_2}\right)=2.0$ .

Example 4

A difference from Example 1 is only that the second active material is $LiMn_{0.9}Fe_{0.1}PO_4$, the average particle size $r_2$ of the primary particles thereof is 100 nm, and the diffusion coefficient $D_2$ of the active ions (specifically, lithium ions) thereof is $1 \times 10^{-14}$ cm$^2$/s. $\left(\dfrac{r_1^2}{D_1}\right)\bigg/\left(\dfrac{r_2^2}{D_2}\right)=0.5$ .

Example 5

A difference from Example 1 is only that the second active material is $LiMn_{0.8}Fe_{0.19}V_{0.01}PO_4$, and the diffusion coefficient $D_2$ of the active ions (specifically, lithium ions) thereof is $4 \times 10^{-14}$ cm$^2$/s. $\left(\dfrac{r_1^2}{D_1}\right)\bigg/\left(\dfrac{r_2^2}{D_2}\right)=2$ .

Example 6

A difference from Example 1 is that both the first active material and the second active material are $LiMn_{0.6}Fe_{0.4}PO_4$, the diffusion coefficients $D_1$ and $D_2$ of the active ions (specifically, lithium ions) of both the first active material and the second active material are $8 \times 10^{-14}$ cm$^2$/s, the average particle size $r_1$ of the primary particles of the first active material is 200 nm, and the average particle size $r_2$ of the primary particles of the second active material is 163 nm.

$\left(\dfrac{r_1^2}{D_1}\right)\bigg/\left(\dfrac{r_2^2}{D_2}\right)=1.5$ .

Example 7

A positive electrode composite material includes a first active material $LiMn_{0.6}Fe_{0.4}PO_4$ and a second active material $LiMn_{0.8}Fe_{0.19}V_{0.01}PO_4$ in a mass ratio of 1:1. An average particle size $r_1$ of primary particles of the first active material is 200 nm, and a diffusion coefficient $D_1$ of active ions (specifically, lithium ions) thereof is $8\times10^{-14}$ cm²/s. An average particle size $r_2$ of primary particles of the second active material is 200 nm, and a diffusion coefficient $D_2$ of active ions (specifically, lithium ions) thereof is $4\times10^{-14}$ cm²/s. $\left(\dfrac{r_1^2}{D_1}\right)\Big/\left(\dfrac{r_2^2}{D_2}\right)=0.5$ .

Example 8

A positive electrode composite material includes a first active material $LiMn_{0.8}Fe_{0.2}PO_4$ and a second active material $LiMn_{0.8}Fe_{0.19}V_{0.01}PO_4$ in a mass ratio of 1:1. An average particle size $r_1$ of primary particles of the first active material is 800 nm, and a diffusion coefficient $D_1$ of active ions (specifically, lithium ions) thereof is $2\times10^{-14}$ cm²/s. An average particle size $r_2$ of primary particles of the second active material is 1600 nm, and a diffusion coefficient $D_2$ of active ions (specifically, lithium ions) thereof is $4\times10^{-14}$ cm²/s. $\left(\dfrac{r_1^2}{D_1}\right)\Big/\left(\dfrac{r_2^2}{D_2}\right)=0.5$ .

Example 9

A positive electrode composite material includes a first active material $LiMn_2O_4$ and a second active material $LiNi_{0.5}Mn_{1.5}O_4$ in a mass ratio of 1:1. An average particle size $r_1$ of primary particles of the first active material is 4 μm, and a diffusion coefficient $D_1$ of active ions (specifically, lithium ions) thereof is $4\times10^{-9}$ cm²/s. An average particle size $r_2$ of primary particles of the second active material is 2 μm, and a diffusion coefficient $D_2$ of active ions (specifically, lithium ions) thereof is $1\times10^{-9}$ cm²/s. $\left(\dfrac{r_1^2}{D_1}\right)\Big/\left(\dfrac{r_2^2}{D_2}\right)=1$ .

To highlight beneficial effects of the examples, the following comparative examples are provided.

Comparative Example 1

A difference from Example 1 is only that the average particle size $r_2$ of the primary particles of the second active material is 50 nm. $\left(\dfrac{r_1^2}{D_1}\right)\Big/\left(\dfrac{r_2^2}{D_2}\right)=4$ .

Comparative Example 2

A difference from Comparative Example 1 is only that the average particle size $r_2$ of the primary particles of the second active material is 158 nm. $\left(\dfrac{r_1^2}{D_1}\right)\Big/\left(\dfrac{r_2^2}{D_2}\right)=0.4$ .

Comparative Example 3

A difference from Example 1 is only that the second active material is $LiMn_{0.7}Fe_{0.29}V_{0.01}PO_4$, and the diffusion coefficient $D_2$ of the active ions (specifically, lithium ions) thereof is $8\times10^{-14}$ cm²/s. $\left(\dfrac{r_1^2}{D_1}\right)\Big/\left(\dfrac{r_2^2}{D_2}\right)=4$ .

Comparative Example 4

A difference from Example 1 is only that the second active material is $LiMn_{0.92}Fe_{0.08}PO_4$, and the diffusion coefficient $D_2$ of the active ions (specifically, lithium ions) thereof is $0.8\times10^{-14}$ cm²/s. $\left(\dfrac{r_1^2}{D_1}\right)\Big/\left(\dfrac{r_2^2}{D_2}\right)=0.4$ .

Comparative Example 5

A difference from Example 9 is only that the average particle size $r_2$ of the primary particles of the second active material is 1 $\mu$m, and $\left(\dfrac{r_1^2}{D_1}\right)\Big/\left(\dfrac{r_2^2}{D_2}\right)=4$ .

The parameters of the first active material and the second active material in the examples and comparative examples are summarized in Table 1.

Table 1

| Experiment number | $r_1$ of the first active material/nm | $D_1$ $10^{-14}$/cm·s$^{-1}$ | $r_2$/nm | $D_2$ $10^{-14}$/cm·s$^{-1}$ | $\lambda$ |
|---|---|---|---|---|---|
| Example 1 | 200 | 8 | 100 | 2 | 1 |
| Example 2 | 200 | 8 | 141 | 2 | 0.5 |
| Example 3 | 200 | 8 | 70.7 | 2 | 2.0 |
| Example 4 | 200 | 8 | 100 | 1 | 0.5 |
| Example 5 | 200 | 8 | 100 | 4 | 2 |
| Example 6 | 200 | 8 | 163 | 8 | 1.5 |
| Example 7 | 200 | 8 | 200 | 4 | 0.5 |
| Example 8 | 800 | 2 | 1600 | 4 | 0.5 |
| Example 9 | 4000 | $4\times10^5$ | 2000 | $1\times10^5$ | 1 |
| Comparative Example 1 | 200 | 8 | 50 | 2 | 4 |
| Comparative Example 2 | 200 | 8 | 158 | 2 | 0.4 |
| Comparative Example 3 | 200 | 8 | 100 | 8 | 4 |
| Comparative Example 4 | 200 | 8 | 100 | 0.8 | 0.4 |
| Comparative Example 5 | 4000 | $4\times10^5$ | 1000 | $1\times10^5$ | 4 |

It should be noted that the diffusion coefficients of the lithium ions in the active materials in the foregoing examples and comparative examples are determined by using the EIS method. Specifically, the method includes the following steps:

Based on a mass ratio of 90:5:5, the active materials as positive electrode materials, a binder (specifically, polyvinylidene fluoride) and a conductive agent (specifically, super p) were evenly mixed in a solvent. A positive electrode slurry was obtained after even mixing. The positive electrode slurry was coated on a surface of a positive electrode current collector (specifically, aluminum foil), followed by drying, rolling, and slitting, to obtain active material electrode plates.

The active material electrode plates were assembled with a negative electrode plate (lithium foil) and a separator to obtain a button cell, a charge/discharge cycling test was carried out at 25°C at a current rate of 0.1C, and a state of charge of the cell was adjusted after three cycles. An EIS test was carried out to obtain a Warburg impedance factor $\sigma$, and the diffusion coefficient of the active ions of each active material was calculated based on the following formula:

$$D = \frac{R^2 T^2}{2A^2 n^4 F^4 C^2 \sigma^2} ,$$

where D represents the diffusion coefficient of the active ions of the active material; R is the gas constant, R=8.314J/(mol·K); T is the absolute temperature, and T=298.15K; n is a quantity of electrons per mole participating in the electrode reaction (for Li$^+$, the value is 1); A is a surface area of the active material electrode plate; F is the Faraday constant, and is specifically 96485C/mol; and C is a concentration of active ions Li$^+$ in the positive electrode material.

A positive electrode plate is produced by using the positive electrode composite materials provided in the foregoing examples and comparative examples, and a battery is assembled and tested. Specific operations are as follows:

(1) Based on a mass ratio of 90:5:5, the positive electrode composite materials provided in the examples and comparative examples, a binder (specifically, polyvinylidene fluoride), and a conductive agent (specifically, carbon nanotubes) were added to a solvent (specifically, N-methylpyrrolidone), and were evenly mixed to obtain a positive electrode slurry. The positive electrode slurry was coated on a surface of a positive electrode current collector (specifically, aluminum foil), followed by drying, rolling and slitting, to obtain positive electrode plates.

(2) The positive electrode plates were stacked alternately with a negative electrode plate and a separator to assemble a full cell, and an electrolyte is injected.

(3) Performance test

The following electrochemical performance tests are carried out on batteries produced from the foregoing examples and comparative examples:

Determining of a 0.1C charge specific capacity of the battery: at 25±3°C, the battery is charged to 4.3V with a constant current-constant voltage at a current of 0.1C, with a cut-off current of 0.02C, and the 0.1C charge specific capacity is calculated.

Determining of a 1C charge constant-current ratio of the battery: at 25±3°C, the battery is charged to 4.3V with a constant current-constant voltage at a current of 1C, with a cut-off current of 0.02C, a specific capacity of a constant-current phase and a total specific capacity are calculated, and the 1C charge constant-current ratio is calculated.

Determining of total charge duration of the battery at 0.33C constant current-constant voltage with a cut-off current of 0.02C: at 25±3°C, the battery is charged to 4.3V with a constant current-constant voltage at a current of 0.33C, with a cut-off current of 0.02C, and the total charge duration of an entire phase is calculated.

Table 2 Summary of electrochemical parameters of batteries in the examples and comparative examples

| Experiment number | 0.1C charge specific capacity/mAh g⁻¹ | 1C charge constant-current ratio/% | Total charge duration at 0.33C CCCV with cut-off current of 0.02C/min |
|---|---|---|---|
| Example 1 | 160.5 | 91.2 | 245 |
| Example 2 | 159.1 | 85.5 | 260 |
| Example 3 | 161.2 | 84.7 | 258 |
| Example 4 | 162.1 | 87.9 | 255 |
| Example 5 | 162.6 | 86.3 | 253 |
| Example 6 | 160.2 | 90.1 | 249 |
| Example 7 | 159.5 | 88.2 | 256 |
| Example 8 | 158.6 | 86.5 | 263 |
| Example 9 | 125.4 | 94.3 | 200 |
| Comparative Example 1 | 157.2 | 82.2 | 272 |
| Comparative Example 2 | 153.9 | 79.6 | 298 |
| Comparative Example 3 | 158.5 | 83.3 | 265 |
| Comparative Example 4 | 151.2 | 78.5 | 305 |
| Comparative Example 5 | 124.5 | 90.5 | 223 |

It may be learned from the data in Table 2 that, when both the first positive electrode active material and the second positive electrode active material of the battery in the examples and the comparative examples are selected from the phosphate-based positive electrode material or from the oxide-based positive electrode material, the foregoing electrochemical parameters of the battery in the examples of this application are better than those of the battery in the comparative examples. Shorter total charge duration indicates a faster extraction rate of Li⁺ from the positive electrode of the battery and higher power performance of the battery. The foregoing batteries are first charged to 4.3V based on a 1C constant current-constant voltage, and then charged at a constant voltage of 4.3V, and the current is gradually reduced to 0.02C for cut-off. A larger proportion of charging at the 1C constant voltage-constant current of battery indicates that the battery is charged faster and indicates better power performance.

In addition, when the positive electrode materials are phosphate-based positive electrode materials, specifically, when the first active material is $LiMn_{0.6}Fe_{0.4}PO_4$ and the second active material is $LiMn_{0.8}Fe_{0.2}PO_4$, it can be found from the data of Examples 1 to 3 that, when the value of $\left(\dfrac{r_1^2}{D_1}\right)\bigg/\left(\dfrac{r_2^2}{D_2}\right)$ falls within a range of 0.8 to 1.25 (Example 1), the battery has a high specific capacity, a high charge constant-current ratio, and short charge duration, and comprehensive performance of the battery is better.

In the descriptions of this specification, "a plurality of" means at least two, for example, two or three, unless otherwise specifically limited.

The foregoing descriptions are example implementations of this application. It should be noted that a person of ordinary skill in the art may further make several improvements and polishings on this application without departing from the principles of this application. These improvements and polishings also fall within the protection scope of this application.

**Claims**

1. A positive electrode composite material, comprising:

    a first active material; and
    a second active material, wherein
    the first active material and the second active material meet the following relationship:

$$0.5 \le \left(\frac{r_1^2}{D_1}\right) \Big/ \left(\frac{r_2^2}{D_2}\right) \le 2$$

    wherein $r_1$ is an average particle size of primary particles of the first active material, $r_2$ is an average particle size of primary particles of the second active material, and $r_1$ and $r_2$ are in a same unit; $D_1$ is a diffusion coefficient of active ions of the first active material, $D_2$ is a diffusion coefficient of active ions of the second active material, and $D_1$ and $D_2$ are in a same unit; and $r_1$ is not equal to $r_2$, and/or $D_1$ is not equal to $D_2$.

2. The positive electrode composite material according to claim 1, wherein $r_1$ is not equal to $r_2$.

3. The positive electrode composite material according to claim 1 or 2, wherein $r_1 > r_2$ and $D_1 < D_2$, or $r_2 > r_1$ and $D_2 < D_1$.

4. The positive electrode composite material according to any one of claims 1 to 3, wherein the active ions are at least one of lithium ions, sodium ions, potassium ions, magnesium ions, aluminum ions, and the like.

5. The positive electrode composite material according to any one of claims 1 to 4, wherein the first active material and the second active material independently comprise at least one of a phosphate-based positive electrode material and an oxide-based positive electrode material; the phosphate-based positive electrode material comprises $Li_{1-a}A_aMn_xM_yFe_{1-x-y}(P_{1-b}E_b)O_4$, wherein $0 \le a < 1$, $0 \le x+y < 1$, $0 \le b < 1$, A comprises $K^+$, $Ca^+$, $Na^+$, and $NH4^+$, M comprises one or more of Ti, V, Co, Ni, Cu, Zn, Mg, Ca, Al, Nb, and Mo, and E comprises one or more of N, Si and B; and the oxide-based positive electrode material comprises one or more of a lithium nickel cobalt manganese oxide, a lithium nickel cobalt aluminum oxide, a lithium-rich manganese-based material, a lithium cobalt oxide, and a lithium manganese oxide.

6. The positive electrode composite material according to any one of claims 1 to 5, wherein the first active material is $Li_{1-a1}A_{a1}Mn_{x1}M_{y1}Fe_{1-x1-y1}(P_{1-b1}E_{b1})O_4$, wherein $0 \le a_1 < 1$, $0 \le x_1+y_1 < 1$, and $0 \le b_1 < 1$; the second active material is $Li_{1-a2}A_{a2}Mn_{x2}M_{y2}Fe_{1-x2-y2}(P_{1-b2}E_{b2})O_4$, wherein $0 \le a_2 < 1$, $0 \le x_2+y_2 < 1$, and $0 \le b_2 < 1$; and $x_1 > x_2$ and $r_1 < r_2$, or $x_1 < x_2$ and $r_1 > r_2$.

7. The positive electrode composite material according to any one of claims 1 to 6, wherein the first active material is $Li_{1-a1}A_{a1}Mn_{x1}M_{y1}Fe_{1-x1-y1}(P_{1-b1}E_{b1})O_4$, wherein $0 \le a_1 < 1$, $0 \le x_1+y_1 < 1$, and $0 \le b_1 < 1$; the second active material is $Li_{1-a2}A_{a2}Mn_{x2}M_{y2}Fe_{1-x2-y2}(P_{1-b2}E_{b2})O_4$, wherein $0 \le a_2 < 1$, $0 \le x_2+y_2 < 1$, and $0 \le b_2 < 1$; and $x_1 = x_2$.

8. The positive electrode composite material according to any one of claims 1 to 7, wherein $r_1$ and $r_2$ are in a range of 20 nm to 5 $\mu$m, respectively.

9. The positive electrode composite material according to any one of claims 1 to 8, wherein $0.8 \le \left(\frac{r_1^2}{D_1}\right) \Big/ \left(\frac{r_2^2}{D_2}\right) \le 1.25$.

10. The positive electrode composite material according to any one of claims 1 to 9, wherein $\dfrac{r_1^2}{D_1} = \dfrac{r_2^2}{D_2}$ .

11. The positive electrode composite material according to claim 1, wherein the second active material comprises at least one active material.

12. The positive electrode composite material according to claim 11, wherein the second active material comprises a second active material A and a second active material B; and

the first active material and the second active material meet the following relationship:

$$\frac{r_1^2}{D_1} = \lambda_1 \frac{r_{2-1}^2}{D_{2-1}} = \lambda_2 \frac{r_{2-2}^2}{D_{2-2}}, \ 0.5 \leq \lambda_1 \leq 2, \ 0.5 \leq \lambda_2 \leq 2$$

wherein $r_1$ is the average particle size of the primary particles of the first active material, $r_{2-1}$ is an average particle size of primary particles of the second active material A, $r_{2-2}$ is an average particle size of primary particles of the second active material B, and $r_1$, $r_{2-1}$, and $r_{2-2}$ are in a same unit; $D_1$ is the diffusion coefficient of the active ions of the first active material, $D_{2-1}$ is a diffusion coefficient of active ions of the second active material A, $D_{2-2}$ is a diffusion coefficient of active ions of the second active material B, and $D_1$, $D_{2-1}$, and $D_{2-2}$ are in a same unit; and $r_1$, $r_{2-1}$, and $r_{2-2}$ are all not equal, and/or $D_1$, $D_{2-1}$, and $D_{2-2}$ are all not equal.

13. The positive electrode composite material according to claim 12, wherein $0.8 \leq \lambda_1 \leq 1.25$, and $0.8 \leq \lambda_2 \leq 1.25$.

14. The positive electrode composite material according to claim 12 or 13, wherein $\lambda_1 = \lambda_2 = 1$.

15. A secondary battery, wherein the secondary battery comprises a positive electrode plate, and the positive electrode plate comprises the positive electrode composite material according to any one of claims 1 to 14.

16. An electrical device, wherein the electrical device comprises the secondary battery according to claim 15.

Electrical device

Secondary battery

Positive electrode plate

FIG. 1

## INTERNATIONAL SEARCH REPORT

| International application No. |
| --- |
| **PCT/CN2023/119691** |

| A. | CLASSIFICATION OF SUBJECT MATTER |
| --- | --- |

H01M 4/36(2006.01)i; H01M10/052(2010.01)i

According to International Patent Classification (IPC) or to both national classification and IPC

| B. | FIELDS SEARCHED |
| --- | --- |

Minimum documentation searched (classification system followed by classification symbols)

    IPC: H01M4/-,H01M10/-

Documentation searched other than minimum documentation to the extent that such documents are included in the fields searched

Electronic data base consulted during the international search (name of data base and, where practicable, search terms used)

    CNTXT, ENTXTC, CNKI, ENTXT, ISI_Web of Science: 电池, 正极, 活性材料, 粒径, 活性离子, 扩散系数, lithium ion batter +, active material, positive plate, diffus+, particle diameter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111446488 A (NINGDE CONTEMPORARY AMPEREX TECHNOLOGY CO., LTD.) 24 July 2020 (2020-07-24) entire document | 1-16 |
| A | CN 114520312 A (BYD CO., LTD.) 20 May 2022 (2022-05-20) entire document | 1-16 |
| A | CN 115458707 A (SUNWODA ELECTRIC VEHICLE BATTERY CO., LTD.) 09 December 2022 (2022-12-09) entire document | 1-16 |
| A | CN 115692598 A (HUIZHOU EVE ENERGY CO., LTD.) 03 February 2023 (2023-02-03) description, paragraphs 2-35 | 1-16 |
| A | WO 2022257717 A1 (ZHUHAI COSMX BATTERY CO., LTD.) 15 December 2022 (2022-12-15) entire document | 1-16 |
| A | KR 1020220049021 A (CONTEMPORARY AMPEREX TECHNOLOGY CO., LTD.) 20 April 2022 (2022-04-20) entire document | 1-16 |

☑ Further documents are listed in the continuation of Box C.      ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **04 November 2023** | **10 November 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/119691** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2008193846 A1 (SANYO ELECTRIC CO., LTD.) 14 August 2008 (2008-08-14) <br> entire document | 1-16 |

Form PCT/ISA/210 (second sheet) (July 2022)

**INTERNATIONAL SEARCH REPORT**
Information on patent family members

International application No.

**PCT/CN2023/119691**

| Patent document cited in search report | | | Publication date (day/month/year) | Patent family member(s) | | | Publication date (day/month/year) |
|---|---|---|---|---|---|---|---|
| CN | 111446488 | A | 24 July 2020 | None | | | |
| CN | 114520312 | A | 20 May 2022 | CN | 114520312 | B | 06 January 2023 |
| CN | 115458707 | A | 09 December 2022 | None | | | |
| CN | 115692598 | A | 03 February 2023 | None | | | |
| WO | 2022257717 | A1 | 15 December 2022 | CN | 113285059 | A | 20 August 2021 |
| KR | 1020220049021 | A | 20 April 2022 | None | | | |
| US | 2008193846 | A1 | 14 August 2008 | JP | 2008198465 | A | 28 August 2008 |
| | | | | JP | 5153156 | B2 | 27 February 2013 |
| | | | | KR | 20080075775 | A | 19 August 2008 |
| | | | | US | 7981544 | B2 | 19 July 2011 |
| | | | | US | 2011229631 | A1 | 22 September 2011 |
| | | | | US | 8043387 | B2 | 25 October 2011 |
| | | | | CN | 101246957 | A | 20 August 2008 |
| | | | | CN | 101246957 | B | 30 November 2011 |

Form PCT/ISA/210 (patent family annex) (July 2022)

**EP 4 657 557 A1**

**Patent documents cited in the description**

- CN 202310188335X